(19) Europäisches Patentamt
European Patent Office
Office européen des brevets

(11) EP 4 177 295 A1

(12) **EUROPEAN PATENT APPLICATION**
published in accordance with Art. 153(4) EPC

(43) Date of publication:
**10.05.2023 Bulletin 2023/19**

(21) Application number: **21832177.6**

(22) Date of filing: **22.06.2021**

(51) International Patent Classification (IPC):
***C08G 73/10*** *(2006.01)* ***C08K 7/02*** *(2006.01)*
***C08L 67/02*** *(2006.01)* ***C08L 79/08*** *(2006.01)*
***C08J 5/04*** *(2006.01)* ***B29C 70/06*** *(2006.01)*
***B29C 70/28*** *(2006.01)*

(52) Cooperative Patent Classification (CPC):
**B29C 70/06; B29C 70/28; C08G 73/10; C08J 5/04; C08K 7/02; C08L 67/02; C08L 79/08**

(86) International application number:
**PCT/JP2021/023493**

(87) International publication number:
**WO 2022/004471 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2020 JP 2020115774**

(71) Applicant: **MITSUBISHI GAS CHEMICAL COMPANY, INC.**
**Chiyoda-ku**
**Tokyo 100-8324 (JP)**

(72) Inventors:
- **SAKAI, Atsushi**
  **Hiratsuka-shi, Kanagawa 254-0016 (JP)**
- **SATO, Yuuki**
  **Hiratsuka-shi, Kanagawa 254-0016 (JP)**

(74) Representative: **Vossius & Partner Patentanwälte Rechtsanwälte mbB**
**Siebertstraße 3**
**81675 München (DE)**

(54) **RESIN COMPOSITION AND MOLDED ARTICLE**

(57) A resin composition containing a liquid crystal polymer (A) and a predetermined polyimide resin (B), wherein the liquid crystal polymer (A) contains at least one repeating structural unit selected from the group consisting of repeating structural units represented by the following formulas (I) to (IV), and a molded article containing the same:

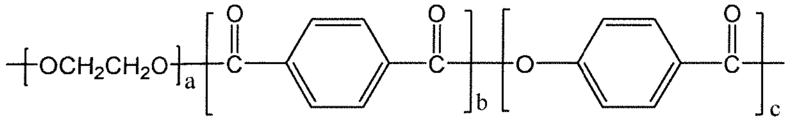

(I)

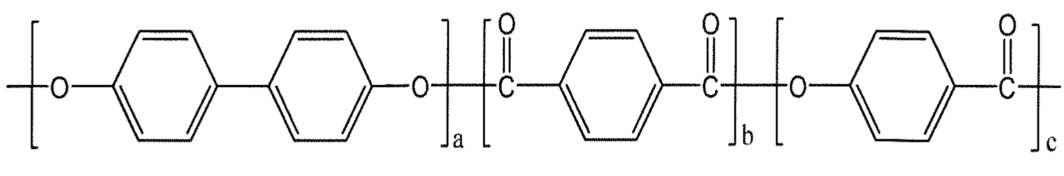

(II)

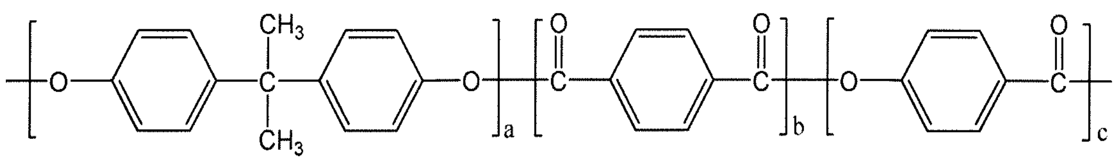

(III)

EP 4 177 295 A1

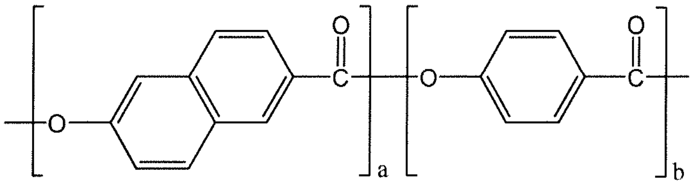

(IV)

wherein a, b, and c represent an average number of repeating structural units.

## Description

Technical Field

The present invention relates to a resin composition and a molded article.

Background Art

Liquid crystal polymers, which are a thermoplastic resin, are known to be an organic material having a low dielectric constant and low dielectric loss tangent, and are used as a material for forming an insulating layer or the like of a printed wiring board (see, for example, Patent Literature 1 and 2).

On the other hand, liquid crystal polymers have a high crystallization rate and their elasticity when melted decreases, and therefore there has been a problem in that they are difficult to handle when melt-forming the liquid crystal polymer. In addition, since liquid crystal polymers are structurally hard and have low flexibility and toughness, improvements in mechanical properties are desired.

Moreover, in recent years, the demand for low dielectric materials as fifth generation mobile communication system (5G) and sixth generation mobile communication system (6G) related members has been increasing, and there is a need for, for example, organic materials having a low dielectric constant of 3.0 or less and a low dielectric loss tangent of 0.005 or less from the viewpoint of obtaining high electrical properties. However, it has been difficult to achieve both a low dielectric constant and a low dielectric loss tangent of the above level with a liquid crystal polymer alone.

Citation List

Patent Literature

PTL 1: JP 2005-317953 A
PTL 2: JP 2011-216841 A

Summary of Invention

Technical Problem

An object of the present invention is to provide a resin composition that contains a liquid crystal polymer, can be easily melt-kneaded and extruded in addition to having excellent handleability when melted, and can achieve both a low dielectric constant and a low dielectric loss tangent, and a molded article containing the resin composition.

Solution to Problem

The present inventors have found that the aforementioned object can be attained by a resin composition containing a predetermined liquid crystal polymer and a crystalline thermoplastic polyimide resin that combines a particular different polyimide structural unit in a particular ratio.

That is, the present invention relates to the following.

[1] A resin composition containing a liquid crystal polymer (A) and a polyimide resin (B), wherein

the liquid crystal polymer (A) contains at least one repeating structural unit selected from the group consisting of repeating structural units represented by the following formulas (I) to (IV), and
the polyimide resin (B) contains a repeating structural unit represented by the following formula (1) and a repeating structural unit represented by the following formula (2), and a content ratio of the repeating structural unit of the formula (1) with respect to the total of the repeating structural unit of the formula (1) and the repeating structural unit of the formula (2) is 20 to 70 mol%:

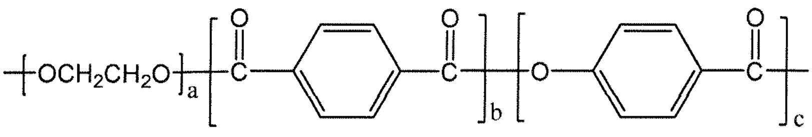
(I)

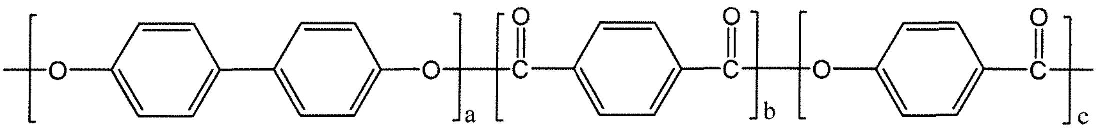
(II)

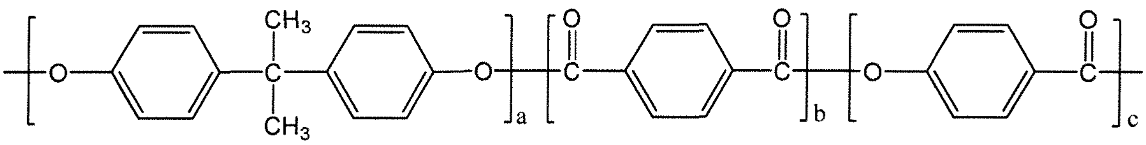
(III)

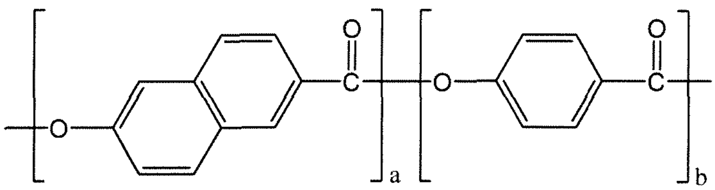
(IV)

wherein a, b, and c represent an average number of repeating structural units, and

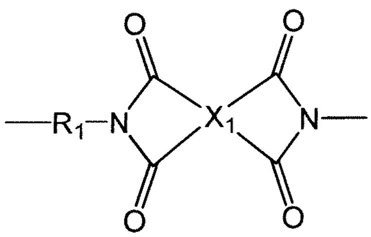
(1)

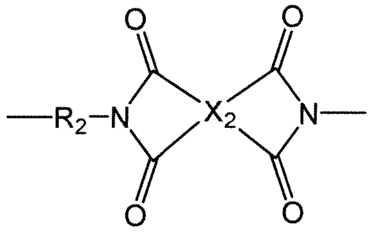
(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

[2] A molded article containing the resin composition according to the above [1].

Advantageous Effects of Invention

The resin composition of the present invention, while containing a liquid crystal polymer, can be easily melt-kneaded and extruded while also having excellent handleability when melted, and can achieve both a low dielectric constant and a low dielectric loss tangent. The resin composition, and a molded article containing the same, can be formed by extrusion, and is expected to be developed in applications requiring a low dielectric constant and a low dielectric loss tangent. For example, the resin composition and molded article containing the same can be applied to applications such as fifth generation mobile communication system (5G) and sixth generation mobile communication system (6G) related members, other electrical and electronic members, and insulating films.

Description of Embodiments

[Resin composition]

The resin composition of the present invention contains a liquid crystal polymer (A) and a polyimide resin (B), wherein the liquid crystal polymer (A) contains at least one repeating structural unit selected from the group consisting of repeating structural units represented by the following formulas (I) to (IV), and the polyimide resin (B) contains a repeating structural unit represented by the following formula (1) and a repeating structural unit represented by the following formula (2), and a content ratio of the repeating structural unit of the formula (1) with respect to the total of the repeating structural unit of the formula (1) and the repeating structural unit of the formula (2) is 20 to 70 mol%:

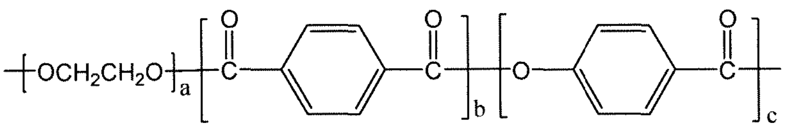
(I)

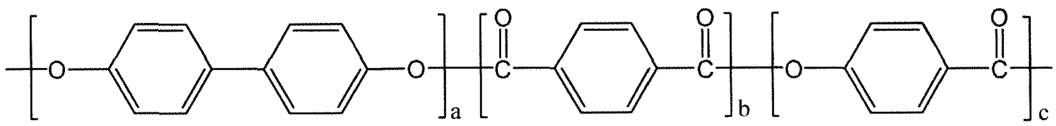
(II)

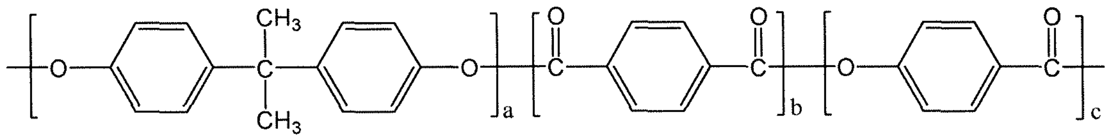
(III)

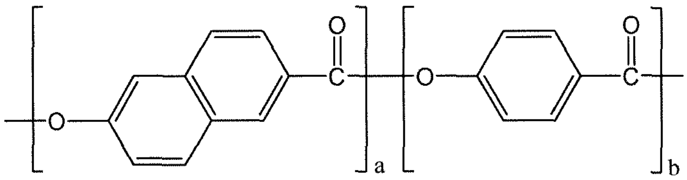
(IV)

wherein a, b, and c represent an average number of repeating structural units, and

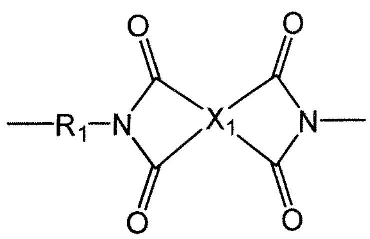
(1)

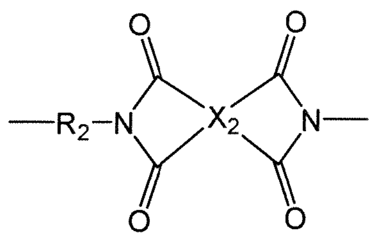
(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

By having the aforementioned structure, the resin composition of the present invention, while containing a liquid crystal polymer, can be easily melt-kneaded and extruded while also having excellent handleability when melted, and can achieve both a low dielectric constant and a low dielectric loss tangent (e.g., a low dielectric constant of 3.0 or less and a low dielectric loss tangent of 0.005 or less).

Although the reason why the above effects are obtained by the present invention is not clear, it is considered to be follows.

The liquid crystal polymer (A) (hereinafter also simply referred to as "component (A)") and the polyimide resin (B) (hereinafter also simply referred to as "component (B)") are both crystalline thermoplastic resins, and it is thought

that these components can form an alloy by being melt-kneaded.

By containing the predetermined repeating structural unit, the liquid crystal polymer (A) can be a polymer that exhibits optical anisotropy and that can achieve a low dielectric loss tangent of, for example, 0.005 or less. Further, by using the liquid crystal polymer (A) together with the polyimide resin (B), the crystallization temperature is improved, and as a result it is thought that a resin composition can be obtained that has a suitable elasticity even when melted at high temperatures (200°C or more) and is easy to handle when melted.

In addition, there has been a problem in that it is difficult to obtain a low dielectric constant of 3.0 or less with the liquid crystal polymer (A) alone. However, by combining with the polyimide resin (B) having a particular structure, it is possible to achieve both a low dielectric constant and a low dielectric loss tangent, and it is believed that, compared with when the polyimide resin (B) is used alone, an increase in the torque, resin temperature, and resin pressure during melt kneading and extrusion can be suppressed.

<Liquid crystal polymer (A)>

The liquid crystal polymer used in the present invention contains at least one repeating structural unit selected from the group consisting of repeating structural units represented by the following formulas (I) to (IV). By containing the repeating structural unit, the liquid crystal polymer (A) can be a liquid crystal polymer that exhibits optical anisotropy and can achieve a low dielectric loss tangent.

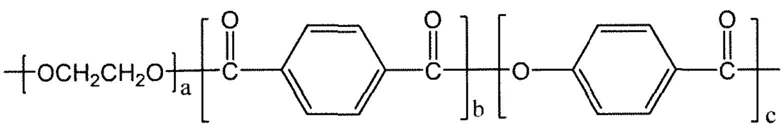
(I)

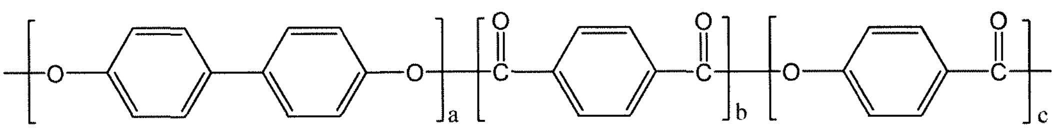
(II)

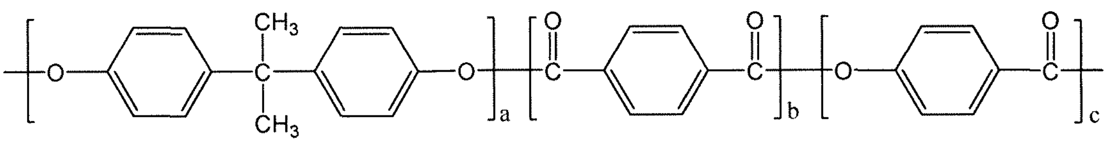
(III)

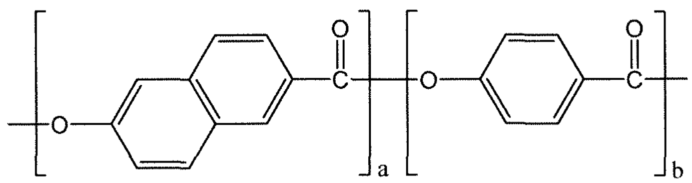
(IV)

wherein a, b, and c represent an average number of repeating structural units.

The repeating structural unit represented by the formula (I) is composed of structural units derived from polyethylene glycol, terephthalic acid, and 4-hydroxybenzoic acid.

The repeating structural unit represented by the formula (II) is composed of structural units derived from 4,4'-dihydroxybiphenyl, terephthalic acid, and 4-hydroxybenzoic acid.

The repeating structural unit represented by the formula (III) is composed of structural units derived from bis(4-hydroxyphenyl)propane (bisphenol A), terephthalic acid, and 4-hydroxybenzoic acid.

The repeating structural unit represented by the formula (IV) is composed of structural units derived from 6-hydroxy-2-naphthoic acid and 4-hydroxybenzoic acid.

In the above formulas, a, b, and c represent an average number of repeating structural units, and each may be a number 1 or more.

The liquid crystal polymer (A) contains at least one of the repeating structural units represented by the formulas (I) to (IV), and may contain two or more. From the viewpoint of achieving a low dielectric constant and a low dielectric loss tangent, it is more preferable that the liquid crystal polymer (A) contain a repeating structural unit represented by the formula (IV).

In the liquid crystal polymer (A), the total content of the repeating structural units represented by the formulas

(I) to (IV) is, from the viewpoint of obtaining a resin composition with a low dielectric loss tangent, preferably 50% by mass or more, more preferably 60% by mass or more, further preferably 70% by mass or more, still further preferably 80% by mass or more, and may be 100% by mass.

The liquid crystal polymer (A) may contain any optional structural unit other than the structural units included in the repeating structural units represented by the formulas (I) to (IV). Examples of the optional structural unit include a structural unit derived from one or more species selected from the group consisting of aromatic hydroxycarboxylic acids, aromatic dicarboxylic acids, aromatic diols, aromatic aminocarboxylic acids, aromatic hydroxyamines, aromatic diamines, aliphatic diols, and aliphatic dicarboxylic acids.

Examples of the structural unit derived from an aromatic hydroxycarboxylic acid as the optional structural unit include, for the liquid crystal polymer (A) containing a repeating structural unit of any of formulas (I) to (III), structural units derived from 3-hydroxybenzoic acid, 2-hydroxybenzoic acid, 6-hydroxy-2-naphthoic acid, 5-hydroxy-2-naphthoic acid, 7-hydroxy-2-naphthoic acid, 3-hydroxy-2-naphthoic acid, 4'-hydroxyphenyl-4-benzoic acid, 3'-hydroxyphenyl-4-benzoic acid, 4'-hydroxyphenyl-3-benzoic acid, and the like. For the liquid crystal polymer (A) containing a repeating structural unit of formula (IV), examples include, among the above, structural units derived from an aromatic hydroxycarboxylic acid other than 6-hydroxy-2-naphthoic acid.

Examples of the structural unit derived from an aromatic dicarboxylic acid as the optional structural unit include, for the liquid crystal polymer (A) containing a repeating structural unit of any of formulas (I) to (III), structural units derived from isophthalic acid, 2,6-naphthalene dicarboxylic acid, 1,6-naphthalenedicarboxylic acid, 2,7-naphthalenedicarboxylic acid, 4,4'-dicarboxybiphenyl, 3,4'-dicarboxybiphenyl, 4,4''-dicarboxyterphenyl, ethylene glycol bis(4-carboxy phenyl)ether, bis(4-carboxyphenoxy)butane, bis(4-carboxyphenyl)ethane, ethylene glycol bis(3-carboxyphenyl)ether, bis(3-carboxyphenyl)ethane, and the like. For the liquid crystal polymer (A) containing a repeating structural unit of formula (IV), examples include, in addition to the structural units derived from an aromatic dicarboxylic acid exemplified above, a structural unit derived from terephthalic acid.

Examples of the structural unit derived from an aromatic diol as the optional structural unit include, for the liquid crystal polymer (A) containing a repeating structural unit of any of formulas (I) to (III), structural units derived from hydroquinone, resorcinol, 2,6-dihydroxynaphthalene, 2,7-dihydroxynaphthalene, 1,6-dihydroxynaphthalene, 3,3'-dihydroxybiphenyl, 3,4'-dihydroxybiphenyl, 4,4'-dihydroxybiphenol ether, bis(4-hydroxyphenyl)ethane, 2,2'-dihydroxybinaphthyl, and the like. For the liquid crystal polymer (A) containing a repeating structural unit of formula (IV), examples include, in addition to the structural units derived from an aromatic diol exemplified above, structural units derived from 4,4'-dihydroxybiphenyl and bis(4-hydroxyphenyl)propane.

Examples of the structural unit derived from an aromatic aminocarboxylic acid as the optional structural unit include structural units derived from 4-aminobenzoic acid, 3-aminobenzoic acid, 6-amino-2-naphthoic acid, and the like.

Examples of the structural unit derived from an aromatic hydroxylamine as the optional structural unit include structural units derived from 4-aminophenol, N-methyl-4-aminophenol, 3-aminophenol, 3-methyl-4-aminophenol, 4-amino-1-naphthol, 4-amino-4'-hydroxybiphenyl, 4-amino-4'-hydroxybiphenyl ether, 4-amino-4'-hydroxybiphenylmethane, 4-amino-4'-hydroxybiphenyl sulfide, 2,2'-diaminobinaphthyl, and the like.

Examples of the structural unit derived from an aromatic diamine as the optional structural unit include structural units derived from 1,4-phenylenediamine, 1,3-phenylenediamine, 1,5-diaminonaphthalene, 2,6-diaminonaphthalene, 1,8-diaminonaphthalene, and the like.

The hydrogen atoms on the aromatic rings in the above-described aromatic dicarboxylic acids, aromatic diols, aromatic aminocarboxylic acids, aromatic hydroxylamines, and aromatic diamines may be substituted with an alkyl group, an alkoxy group, or a halogen.

Examples of the structural unit derived from an aliphatic diol as the optional structural unit include, for the liquid crystal polymer (A) containing a repeating structural unit of formula (I), structural units derived from propylene glycol, 1,4-butanediol, 1,6-hexanediol, and the like. For the liquid crystal polymer (A) containing a repeating structural unit of formulas (II) to (IV), examples include, in addition to structural units derived from the aliphatic diols exemplified above, a structural unit derived from ethylene glycol.

Examples of the structural unit derived from an aliphatic dicarboxylic acid as the optional structural unit include structural units derived from oxalic acid, malonic acid, succinic acid, glutaric acid, adipic acid, pimelic acid, suberic acid, azelaic acid, sebacic acid, dodecanedioic acid, tetradecanedioic acid, fumaric acid, maleic acid, hexahydroterephthalic acid, and the like.

One or more types of any of the above optional structural units can be contained. However, from the viewpoint of obtaining a resin composition with a low dielectric loss tangent, when the liquid crystal polymer (A) contains an optional structural unit, the content of the optional structural unit in the liquid crystal polymer (A) is preferably 50% by mass or less, more preferably 40% by mass or less, further preferably 30% by mass or less, and still further preferably 20% by mass or less.

From the viewpoint of ease of melt-kneading and extrusion with the polyimide resin (B) described later, and the heat resistance of the resin composition obtained, the liquid crystal polymer (A) preferably has a melting point of

180°C or more, more preferably 200°C or more, and further preferably 215°C or more. Although the upper limit of the melting point of the liquid crystal polymer (A) is not particularly limited, from the viewpoint of formability of the resin composition obtained, the upper limit is preferably 350°C or less, and more preferably 330°C or less.

The method for producing the liquid crystal polymer (A) is not particularly limited, and the liquid crystal polymer (A) can be produced by subjecting polymerizable monomers for forming each repeating structural unit constituting the liquid crystal polymer (A) to polycondensation by a known method.

<Polyimide resin (B)>

The polyimide resin (B) used in the present invention contains a repeating structural unit represented by the following formula (1) and a repeating structural unit represented by the following formula (2), a content ratio of the repeating structural unit of the formula (1) with respect to the total of the repeating structural unit of the formula (1) and the repeating structural unit of the formula (2) being 20 to 70 mol%. By containing both the liquid crystal polymer (A) and the polyimide resin (B), the resin composition of the present invention can have excellent handleability when melted, excellent melt-kneading properties and extrusion properties, and has a low dielectric constant and a low dielectric loss tangent.

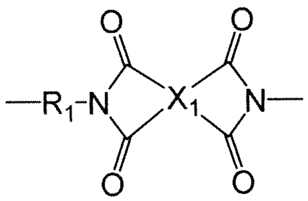

(1)

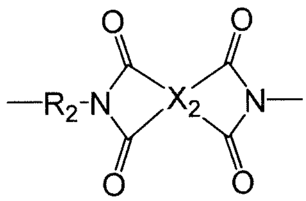

(2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

The polyimide resin (B) used in the present invention is a thermoplastic resin, which is preferably in a powder or pellet form. The thermoplastic polyimide resin is distinguished from, for example, polyimide resins formed by closing the imide ring after shaping in a state of a polyimide precursor such as a polyamic acid and having no glass transition temperature (Tg), or polyimide resins that decompose at a temperature lower than the glass transition temperature.

The repeating structural unit of formula (1) will be described in detail below.

$R_1$ represents a divalent group having from 6 to 22 carbon atoms containing at least one alicyclic hydrocarbon structure. The alicyclic hydrocarbon structure herein means a ring derived from an alicyclic hydrocarbon compound, and the alicyclic hydrocarbon compound may be either saturated or unsaturated and may be either monocyclic or polycyclic.

Examples of the alicyclic hydrocarbon structure include a cycloalkane ring, such as a cyclohexane ring, a cycloalkene ring, such as cyclohexene, a bicycloalkane ring, such as a norbornane ring, and a bicycloalkene ring, such as norbornene, but the alicyclic hydrocarbon structure is not limited thereto. Among these, a cycloalkane ring is preferred, a cycloalkane ring having from 4 to 7 carbon atoms is more preferred, and a cyclohexane ring is further preferred.

$R_1$ has from 6 to 22 carbon atoms, and preferably from 8 to 17 carbon atoms.

$R_1$ contains at least one alicyclic hydrocarbon structure, and preferably from 1 to 3 alicyclic hydrocarbon structures.

$R_1$ is preferably a divalent group represented by the following formula (R1-1) or (R1-2):

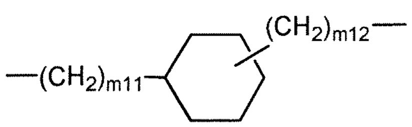

(R1-1)

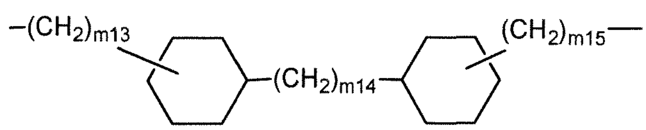

(R1-2)

wherein $m_{11}$ and $m_{12}$ each independently represent an integer of 0-2, and preferably 0 or 1; and $m_{13}$ to $m_{15}$ each independently represent an integer of 0-2, and preferably 0 or 1.

$R_1$ is particularly preferably a divalent group represented by the following formula (R1-3):

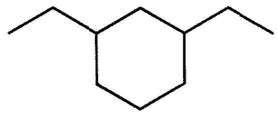

(R1-3)

In the divalent group represented by the formula (R1-3), the conformation of the two methylene groups with respect to the cyclohexane ring may be either cis or trans, and the ratio of cis and trans may be an arbitrary value.

$X_1$ is a tetravalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$X_1$ has from 6 to 22 carbon atoms, and preferably has from 6 to 18 carbon atoms.

$X_1$ contains at least one aromatic ring, and preferably contains from 1 to 3 aromatic rings.

$X_1$ is preferably a tetravalent group represented by one of the following formulae (X-1) to (X-4):

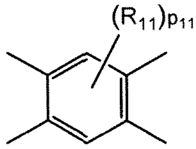

(X-1)

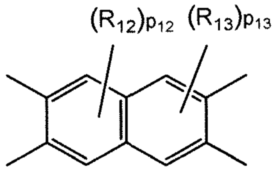

(X-2)

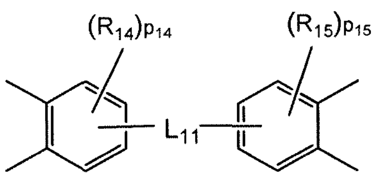

(X-3)

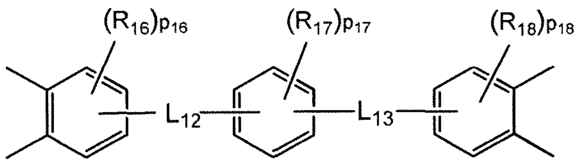

(X-4)

wherein $R_{11}$ to $R_{18}$ each independently represent an alkyl group having from 1 to 4 carbon atoms; $p_{11}$ to $p_{13}$ each independently represent an integer of 0-2, and preferably 0; $p_{14}$, $p_{15}$, $p_{16}$ and $p_{18}$ each independently represent an integer of 0-3, and preferably 0; $p_{17}$ represents an integer of 0-4, and preferably 0; and $L_{11}$ to $L_{13}$ each independently represent a single bond, an ether group, a carbonyl group or an alkylene group having from 1 to 4 carbon atoms.

$X_1$ is a tetravalent group having from 6 to 22 carbon atoms containing at least one aromatic ring, and therefore $R_{12}$, $R_{13}$, $p_{12}$ and $p_{13}$ in the formula (X-2) are selected in such a manner that the tetravalent group represented by the formula (X-2) has from 10 to 22 carbon atoms.

Similarly, $L_{11}$, $R_{14}$, $R_{15}$, $p_{14}$ and pis in the formula (X-3) are selected in such a manner that the tetravalent group represented by the formula (X-3) has from 12 to 22 carbon atoms, and $L_{12}$, $L_{13}$, $R_{16}$, $R_{17}$, $R_{18}$, $p_{16}$, $p_{17}$ and $p_{18}$ in the formula (X-4) are selected in such a manner that the tetravalent group represented by the formula (X-4) has from 18 to 22 carbon atoms.

$X_1$ is particularly preferably a tetravalent group represented by the following formula (X-5) or (X-6):

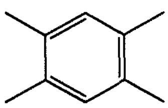

(X-5)

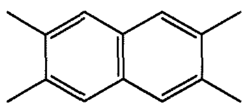

(X-6)

Next, the repeating structural unit of formula (2) will be described in detail below.

$R_2$ represents a divalent chain aliphatic group having from 5 to 16 carbon atoms, preferably from 6 to 14 carbon

atoms, more preferably from 7 to 12 carbon atoms, and further preferably from 8 to 10 carbon atoms. The chain aliphatic group herein means a group derived from a chain aliphatic compound, and the chain aliphatic compound may be either saturated or unsaturated, may be in the form of either linear or branched chain, and may contain a hetero atom, such as an oxygen atom.

$R_2$ is preferably an alkylene group having from 5 to 16 carbon atoms, more preferably an alkylene group having from 6 to 14 carbon atoms, further preferably an alkylene group having from 7 to 12 carbon atoms, and particularly preferably an alkylene group having from 8 to 10 carbon atoms. The alkylene group may be either a linear alkylene group or a branched alkylene group, and is preferably a linear alkylene group.

$R_2$ preferably represents at least one selected from the group consisting of an octamethylene group and a decamethylene group, and particularly preferably represents an octamethylene group.

Another preferred embodiment of $R_2$ is a divalent chain aliphatic group having from 5 to 16 carbon atoms containing an ether group. The divalent chain aliphatic group preferably has from 6 to 14 carbon atoms, more preferably from 7 to 12 carbon atoms, and further preferably from 8 to 10 carbon atoms. Preferred examples of the group include a divalent group represented by the following formula (R2-1) or (R2-2):

$$-(CH_2)_{m21}-O-(CH_2)_{m22}- \qquad \text{(R2-1)}$$

$$-(CH_2)_{m23}-O-(CH_2)_{m24}-O-(CH_2)_{m25}- \qquad \text{(R2-2)}$$

wherein $m_{21}$ and $m_{22}$ each independently represent an integer of 1-15, preferably 1-13, more preferably 1-11, and further preferably 1-9; and $m_{23}$ to $m_{25}$ each independently represent an integer of 1-14, preferably 1-12, more preferably 1-10, and further preferably 1-8.

$R_2$ represents a divalent chain aliphatic group having from 5 to 16 carbon atoms (preferably from 6 to 14 carbon atoms, more preferably from 7 to 12 carbon atoms, and further preferably from 8 to 10 carbon atoms), and therefore $m_{21}$ and $m_{22}$ in the formula (R2-1) are selected so that the divalent group represented by the formula (R2-1) has from 5 to 16 carbon atoms (preferably from 6 to 14 carbon atoms, more preferably from 7 to 12 carbon atoms, and further preferably from 8 to 10 carbon atoms), i.e., $m_{21} + m_{22}$ is from 5 to 16 (preferably 6 to 14, more preferably 7 to 12, and further preferably 8 to 10).

Similarly, $m_{23}$ to $m_{25}$ in the formula (R2-2) are selected so that the divalent group represented by the formula (R2-2) has from 5 to 16 carbon atoms (preferably from 6 to 14 carbon atoms, more preferably from 7 to 12 carbon atoms, and further preferably from 8 to 10 carbon atoms), i.e., $m_{23} + m_{24} + m_{25}$ is from 5 to 16 (preferably from 6 to 14 carbon atoms, more preferably from 7 to 12 carbon atoms, and further preferably from 8 to 10 carbon atoms).

$X_2$ is defined similarly to $X_1$ in the formula (1), and preferred embodiments thereof are also the same.

The content ratio of the repeating structural unit of the formula (1) with respect to the total of the repeating structural unit of the formula (1) and the repeating structural unit of the formula (2) is 20 mol% to 70 mol%. In the case where the content ratio of the repeating structural unit of the formula (1) is in the above range, the polyimide resin may also be sufficiently crystallized in an ordinary injection molding cycle. When the content ratio is less than 20 mol%, molding processability is deteriorated, and when the content ratio is more than 70 mol%, crystallinity is deteriorated to thereby result in deterioration in heat resistance.

The content ratio of the repeating structural unit of the formula (1) with respect to the total of the repeating structural unit of the formula (1) and the repeating structural unit of the formula (2) is preferably 65 mol% or less, more preferably 60 mol% or less, and further preferably 50 mol% or less from the viewpoint of exerting high crystallinity.

Among these, the content ratio of the repeating structural unit of the formula (1) with respect to the total of the repeating structural unit of the formula (1) and the repeating structural unit of the formula (2) is preferably 20 mol% or more and less than 40 mol%. When the ratio falls within this range, the crystallinity of the polyimide resin (B) increases, and it is possible to obtain a resin composition being more excellent in heat resistance.

The content ratio described above is preferably 25 mol% or more, more preferably 30 mol% or more, further preferably 32 mol% or more from the viewpoint of molding processability, and is further preferably 35 mol% or less from the viewpoint of exerting high crystallinity.

The content ratio of the total of the repeating structural unit of the formula (1) and the repeating structural unit of the formula (2) with respect to the total repeating structural units constituting the polyimide resin (B) is preferably 50 to 100 mol%, more preferably 75 to 100 mol%, further preferably 80 to 100 mol%, and still further preferably 85 to 100 mol%.

The polyimide resin (B) may further contain a repeating structural unit represented by the following formula (3). In this case, the content ratio of the repeating structural unit of formula (3) with respect to the total of the repeating structural unit of formula (1) and the repeating structural unit of formula (2) is preferably 25 mol% or less. The lower limit thereof is not particularly limited but needs to exceed 0 mol%.

From the viewpoint of improving heat resistance, the content ratio is preferably 5 mol% or more, and more preferably 10 mol% or more, while from the viewpoint of maintaining crystallinity, the content ratio is preferably 20 mol%

or less, and more preferably 15 mol% or less.

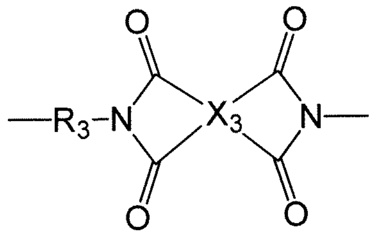

(3)

wherein $R_3$ represents a divalent group having from 6 to 22 carbon atoms containing at least one aromatic ring; and $X_3$ represents a tetravalent group having from 6 to 22 carbon atoms containing at least one aromatic ring.

$R_3$ is a divalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$R_3$ has from 6 to 22 carbon atoms, and preferably has from 6 to 18 carbon atoms.

$R_3$ contains at least one aromatic ring, and preferably contains from 1 to 3 aromatic rings.

The aromatic ring may also be bonded to a monovalent or divalent electron-attracting group. Examples of the monovalent electron-attracting group include a nitro group, a cyano group, a p-toluenesulfonyl group, halogen, an alkyl halide group, a phenyl group, and an acyl group. Examples of the divalent electron-attracting group include alkylene halide groups such as alkylene fluoride groups (e.g., $-C(CF_3)_2-$ and $-(CF_2)_p-$ (wherein p is an integer of 1-10), as well as -CO-, $-SO_2-$, -SO-, -CONH-, and -COO-.

$R_3$ is preferably a divalent group represented by the following formula (R3-1) or (R3-2):

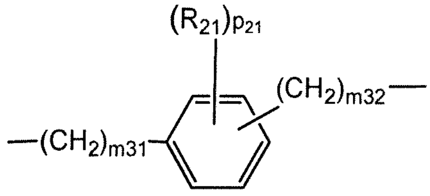

(R3-1)

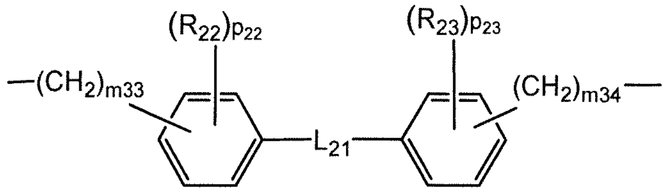

(R3-2)

wherein $m_{31}$ and $m_{32}$ each independently represent an integer of 0-2, and preferably 0 or 1; $m_{33}$ and $m_{34}$ each independently represent an integer of 0-2, and preferably 0 or 1; $R_{21}$, $R_{22}$ and $R_{23}$ each independently represent an alkyl group having from 1 to 4 carbon atoms, an alkenyl group having from 2 to 4 carbon atoms or an alkynyl group having from 2 to 4 carbon atoms; $p_{21}$, $p_{22}$ and $p_{23}$ each represent an integer of 0-4, and preferably 0; and $L_{21}$ represents a single bond, an ether group, a carbonyl group or an alkylene group having from 1 to 4 carbon atoms.

$R_3$ is a divalent group having from 6 to 22 carbon atoms containing at least one aromatic ring, and therefore $m_{31}$, $m_{32}$, $R_{21}$ and $p_{21}$ in the formula (R3-1) are selected in such a manner that the divalent group represented by the formula (R3-1) has from 6 to 22 carbon atoms.

Similarly, $L_{21}$, $m_{33}$, $m_{34}$, $R_{22}$, $R_{23}$, $p_{22}$ and $p_{23}$ in the formula (R3-2) are selected in such a manner that the divalent group represented by the formula (R3-2) has from 12 to 22 carbon atoms.

$X_3$ is defined similarly to $X_1$ in the formula (1), and preferred embodiments thereof are also the same.

The polyimide resin (B) may further contain a repeating structural unit represented by the following formula (4):

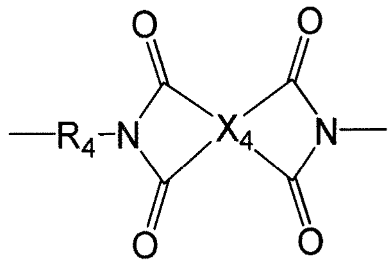

(4)

wherein $R_4$ represents a divalent group containing $-SO_2-$ or $-Si(R_x)(R_y)O-$; $R_x$ and $R_y$ each independently represent a chain aliphatic group having from 1 to 3 carbon atoms, or a phenyl group; and $X_4$ represents a tetravalent group having from 6 to 22 carbon atoms containing at least one aromatic ring.

$X_4$ is defined similarly to $X_1$ in the formula (1), and preferred embodiments thereof are also the same.

The end structure of the polyimide resin (B) is not particularly limited, and preferably has a chain aliphatic group having 5 to 14 carbon atoms at the end thereof.

The chain aliphatic group may be either saturated or unsaturated, and may be in the form of either linear or branched chain. When the polyimide resin (B) contains the above particular group at the end thereof, it is possible to obtain a resin composition excellent in heat aging resistance.

Example of the saturated chain aliphatic group having from 5 to 14 carbon atoms include an n-pentyl group, an n-hexyl group, an n-heptyl group, an n-octyl group, an n-nonyl group, an n-decyl group, an n-undecyl group, a lauryl group, an n-tridecyl group, an n-tetradecyl group, an isopentyl group, a neopentyl group, a 2-methylpentyl group, a 2-methylhexyl group, a 2-ethylpentyl group, a 3-ethylpentyl group, an isooctyl group, a 2-ethylhexyl group, a 3-ethylhexyl group, an isononyl group, a 2-ethyloctyl group, an isodecyl group, an isododecyl group, an isotridecyl group and an isotetradecyl group.

Example of the unsaturated chain aliphatic group having from 5 to 14 carbon atoms include a 1-pentenyl group, a 2-pentenyl group, a 1-hexenyl group, a 2-hexenyl group, a 1-heptenyl group, a 2-heptenyl group, a 1-octenyl group, a 2-octenyl group, a nonenyl group, a decenyl group, a dodecenyl group, a tridecenyl group and a tetradecenyl group.

Among these, the chain aliphatic group is preferably a saturated chain aliphatic group, and more preferably a saturated linear aliphatic group. The chain aliphatic group preferably has 6 or more carbon atoms, more preferably 7 or more carbon atoms and further preferably 8 or more carbon atoms, and preferably has 12 or less carbon atoms, more preferably 10 or less carbon atoms and further preferably 9 or less carbon atoms from the viewpoint of achievement of heat aging resistance. The chain aliphatic group may be adopted singly or in combinations of two or more.

The chain aliphatic group is particularly preferably at least one selected from the group consisting of an n-octyl group, an isooctyl group, a 2-ethylhexyl group, an n-nonyl group, an isononyl group, an n-decyl group and an isodecyl group, further preferably at least one selected from the group consisting of an n-octyl group, an isooctyl group, a 2-ethylhexyl group, an n-nonyl group, and an isononyl group, and most preferably at least one selected from the group consisting of an n-octyl group, an isooctyl group, and a 2-ethylhexyl group.

The polyimide resin (B) preferably contains only a chain aliphatic group having from 5 to 14 carbon atoms, besides a terminal amino group and a terminal carboxy group, at the end thereof from the viewpoint of heat aging resistance. When a group, besides the above groups, is contained at the end, the content thereof with respect to the chain aliphatic group having from 5 to 14 carbon atoms is preferably 10 mol% or less and more preferably 5 mol% or less.

The content of the chain aliphatic group having from 5 to 14 carbon atoms in the polyimide resin (B) is preferably 0.01 mol% or more, more preferably 0.1 mol% or more, and further preferably 0.2 mol% or more based on the total 100 mol% of the total repeating structural units constituting the polyimide resin (B) from the viewpoint of exerting excellent heat aging resistance. Further, to ensure a sufficient molecular weight and obtain good mechanical properties, the content of the chain aliphatic group having from 5 to 14 carbon atoms in the polyimide resin (B) is, with respect to a total of 100 mol% of all the repeating structural units constituting the polyimide resin (B), preferably 10 mol% or less, more preferably 6 mol% or less, further preferably 3.5 mol% or less, still further preferably 2.0 mol% or less, and even still further preferably 1.2 mol% or less.

The content of the chain aliphatic group having from 5 to 14 carbon atoms in the polyimide resin (B) can be determined by depolymerization of the polyimide resin (B).

The polyimide resin (B) preferably has a melting point of 360°C or lower and a glass transition temperature of 150°C or higher. The melting point of the polyimide resin (B) is more preferably 280°C or higher and further preferably 290°C or higher from the viewpoint of heat resistance, and is preferably 345°C or lower, more preferably 340°C or lower,

and further preferably 335°C or lower from the viewpoint of exerting high molding processability. In addition, the glass transition temperature of the polyimide resin (B) is more preferably 160°C or higher and more preferably 170°C or higher from the viewpoint of heat resistance, and is preferably 250°C or lower, more preferably 230°C or lower, and further preferably 200°C or lower from the viewpoint of exerting high molding processability.

Both the melting point and the glass transition temperature of the polyimide resin (B) can be measured by a differential scanning calorimeter.

In addition, in the polyimide resin (B), the exothermic amount (hereinafter, also simply referred to as "exothermic amount of crystallization") of the crystallization exothermic peak observed in melting and then cooling of the polyimide resin at a cooling rate of 20°C/min with differential scanning calorimetric measurement is preferably 5.0 mJ/mg or more, more preferably 10.0 mJ/mg or more, and further preferably 17.0 mJ/mg or more from the viewpoint of enhancement of crystallinity, heat resistance, mechanical strength, and chemical resistance. The upper limit of the exothermic amount of crystallization is not particularly limited, and is usually 45.0 mJ/mg or less.

The melting point, glass transition temperature, and exothermic amount of crystallization of the polyimide resin (B) specifically can be measured by the methods described in the examples.

The logarithmic viscosity of the polyimide resin (B) at 30°C in a 5 mass% concentrated sulfuric acid solution is preferably 0.2 to 2.0 dL/g and more preferably 0.3 to 1.8 dL/g. When the logarithmic viscosity is 0.2 dL/g or more, a molded article formed of the resin composition obtained has sufficient mechanical strength, and when the logarithmic viscosity is 2.0 dL/g or less, molding processability and handleability are good. The logarithmic viscosity $\mu$ is obtained according to the following expression by measuring the elapsed times for flowing concentrated sulfuric acid and the polyimide resin solution at 30°C with a Cannon-Fenske viscometer.

$$\mu = \ln(ts/t_0)/C$$

$t_0$: elapsed time for flowing concentrated sulfuric acid
ts: elapsed time for flowing polyimide resin solution
C: 0.5 (g/dL)

The weight average molecular weight Mw of the polyimide resin (B) is preferably in the range of 10,000 to 150,000, more preferably 15,000 to 100,000, further preferably 20,000 to 80,000, still further preferably 30,000 to 70,000, and still further preferably 35,000 to 65,000. When the weight average molecular weight Mw of the polyimide resin (B) is 10,000 or more, the mechanical strength is good, and when it is 150,000 or less, the molding processability is good.

The weight average molecular weight Mw of the polyimide resin (B) can be measured by a gel permeation chromatography (GPC) method using polymethyl methacrylate (PMMA) as a standard sample.

(Method for producing polyimide resin (B))

The polyimide resin (B) may be produced by reacting a tetracarboxylic acid component and a diamine component. The tetracarboxylic acid component contains a tetracarboxylic acid containing at least one aromatic ring and/or a derivative thereof, and the diamine component contains a diamine containing at least one alicyclic hydrocarbon structure and a chain aliphatic diamine.

The tetracarboxylic acid containing at least one aromatic ring is preferably a compound having four carboxy groups that are bonded directly to the aromatic ring, and may contain an alkyl group in the structure thereof. The tetracarboxylic acid preferably has from 6 to 26 carbon atoms. Preferred examples of the tetracarboxylic acid include pyromellitic acid, 2,3,5,6-toluenetetracarboxylic acid, 3,3',4,4'-benzophenonetetracarboxylic acid, 3,3',4,4'-biphenyltetracarboxylic acid and 1,4,5,8-naphthalenetetracarboxylic acid. Among these, pyromellitic acid is more preferred.

Examples of the derivative of the tetracarboxylic acid containing at least one aromatic ring include an anhydride and an alkyl ester compound of a tetracarboxylic acid containing at least one aromatic ring. The derivative of the tetracarboxylic acid preferably has from 6 to 38 carbon atoms. Examples of the anhydride of the tetracarboxylic acid include pyromellitic monoanhydride, pyromellitic dianhydride, 2,3,5,6-toluenetetracarboxylic dianhydride, 3,3',4,4'-diphenylsulfonetetracarboxylic dianhydride, 3,3',4,4'-benzophenonetetracarboxylic dianhydride, 3,3',4,4'-biphenyltetracarboxylic dianhydride and 1,4,5,8-naphthalenetetracarboxylic dianhydride. Examples of the alkyl ester compound of the tetracarboxylic acid include dimethyl pyromellitate, diethyl pyromellitate, dipropyl pyromellitate, diisopropyl pyromellitate, dimethyl 2,3,5,6-toluenetetracarboxylate, dimethyl 3,3',4,4'-diphenylsulfonetetracarboxylate, dimethyl 3,3',4,4'-benzophenonetetracarboxylate, dimethyl 3,3',4,4'-biphenyltetracarboxylate and dimethyl 1,4,5,8-naphthalenetetracarboxylate. The alkyl group in the alkyl ester compound of the tetracarboxylic acid preferably has from 1 to 3 carbon atoms.

The tetracarboxylic acid containing at least one aromatic ring and/or the derivative thereof may be used as a sole compound selected from the aforementioned compounds or may be used as a combination of two or more compounds.

The diamine containing at least one alicyclic hydrocarbon structure preferably has from 6 to 22 carbon atoms, and preferred examples thereof include 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), carvone diamine, limonene diamine, isophorone diamine, norbornane diamine, bis(aminomethyl)tricyclo[5.2.1.0$^{2,6}$]decane, 3,3'-dimethyl-4,4'-diaminodicyclohexylmethane and 4,4'-diaminodicyclohexylpropane. These compounds may be used solely or may be used as a combination of two or more compounds selected therefrom. Among these, 1,3-bis(aminomethyl)cyclohexane is preferably used. A diamine containing an alicyclic hydrocarbon structure generally has conformational isomers, and the ratio of the cis isomer and the trans isomer is not particularly limited.

The chain aliphatic diamine may be in the form of either linear or branched chain, and has preferably from 5 to 16 carbon atoms, more preferably from 6 to 14 carbon atoms and further preferably from 7 to 12 carbon atoms. The linear moiety having from 5 to 16 carbon atoms may contain an ether bond in the course thereof. Preferred examples of the chain aliphatic diamine include 1,5-pentamethylenediamine, 2-methylpentane-1,5-diamine, 3-methylpentane-1,5-diamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine, and 2,2'-(ethylenedioxy)bis(ethyleneamine).

The chain aliphatic diamine may be used as a sole compound or as a mixture of plural kinds thereof. Among these, a chain aliphatic diamine having from 8 to 10 carbon atoms can be preferably used, and at least one selected from the group consisting of 1,8-octamethylenediamine and 1,10-decamethylenediamine can be particularly preferably used.

In the production of the polyimide resin (B), the molar ratio of the charged amount of the diamine containing at least one alicyclic hydrocarbon structure with respect to the total amount of the diamine containing at least one alicyclic hydrocarbon structure and the chain aliphatic diamine is preferably 20 to 70 mol%. The molar ratio is preferably 25 mol% or more, more preferably 30 mol% or more, further preferably 32 mol% or more, and is preferably 60 mol% or less, more preferably 50 mol% or less, further preferably less than 40 mol, and further preferably 35 mol% or less from the viewpoint of exerting high crystallinity.

The diamine component may contain a diamine containing at least one aromatic ring. The diamine containing at least one aromatic ring preferably has from 6 to 22 carbon atoms, and examples thereof include o-xylylenediamine, m-xylylenediamine, p-xylylenediamine, 1,2-diethynylbenzenediamine, 1,3-diethynylbenzenediamine, 1,4-diethynylbenzenediamine, 1,2-diaminobenzene, 1,3-diaminobenzene, 1,4-diaminobenzene, 4,4'-diaminodiphenyl ether, 3,4'-diaminodiphenyl ether, 4,4'-diaminodiphenylmethane, $\alpha,\alpha'$-bis(4-aminophenyl)-1,4-diisopropylbenzene, $\alpha,\alpha'$-bis(3-aminophenyl)-1,4-diisopropylbenzene, 2,2-bis(4-(4-aminophenoxy)phenyl)propane, 2,6-diaminonaphthalene and 1,5-diaminonaphthalene.

The molar ratio of the charged amount of the diamine containing at least one aromatic ring with respect to the total amount of the diamine containing at least one alicyclic hydrocarbon structure and the chain aliphatic diamine is preferably 25 mol% or less. The lower limit thereof is not particularly limited but needs to exceed 0 mol%.

The molar ratio is preferably 5 mol% or more, and more preferably 10 mol% or more, from the viewpoint of enhancement of the heat resistance, and is preferably 20 mol% or less, and more preferably 15 mol% or less, from the viewpoint of maintenance of the crystallinity.

In addition, the molar ratio is preferably 12 mol% or less, more preferably 10 mol% or less, further preferably 5 mol% or less and still more preferably 0 mol% from the viewpoint of a decrease in coloration of the polyimide resin.

In the production of the polyimide resin (B), the charged amount ratio of the tetracarboxylic acid component and the diamine component is preferably from 0.9 to 1.1 mol of the diamine component per 1 mol of the tetracarboxylic acid component.

In the production of the polyimide resin (B), an end capping agent may be mixed in addition to the tetracarboxylic acid component and the diamine component. The end capping agent is preferably at least one selected from the group consisting of a monoamine compound and a dicarboxylic acid compound. It is sufficient for the amount of the end capping agent used to be an amount in which a desired amount of the end group can be introduced into the polyimide resin (B). This used amount is, based on one mole of the tetracarboxylic acid and/or derivative thereof, preferably from 0.0001 to 0.1 moles, more preferably from 0.001 to 0.06 moles, further preferably from 0.002 to 0.035 moles, still further preferably from 0.002 to 0.020 moles, and even still further preferably from 0.002 to 0.012 moles.

Among them, monoamine end capping agents are preferable as the end capping agent, and from the viewpoint of introducing the above-described chain aliphatic group having 5 to 14 carbon atoms at an end of the polyimide resin (B) to improve heat aging resistance, a monoamine that has a chain aliphatic group having 5 to 14 carbon atoms is more preferable, and a monoamine that has a saturated linear aliphatic group having 5 to 14 carbon atoms is further preferable.

The end capping agent is particularly preferably at least one selected from the group consisting of n-octylamine,

isooctylamine, 2-ethylhexylamine, n-nonylamine, isononylamine, n-decylamine, and isodecylamine, further preferably at least one selected from the group consisting of n-octylamine, isooctylamine, 2-ethylhexylamine, n-nonylamine, and isononylamine, and most preferably at least one selected from the group consisting of n-octylamine, isooctylamine, and 2-ethylhexylamine.

As a polymerization method for producing the polyimide resin (B), a known polymerization method may be applied, and the method described in WO 2016/147996 can be used.

The mass ratio of the liquid crystal polymer (A) to the polyimide resin (B), [(A)/(B)], in the resin composition of the present invention is not particularly limited, and may be 0.1/99.9 to 99.9./0.1.

From the viewpoint of obtaining good handleability when melted, formability, and a low dielectric constant, the proportion of the polyimide resin (B) is preferably high, and from the viewpoint of obtaining good melt-kneadability and extrusion properties and a low dielectric loss tangent, the proportion of the liquid crystal polymer is preferably high.

From the viewpoint of achieving a low dielectric constant and a low dielectric loss tangent, and particularly from the viewpoint of obtaining a resin composition having a dielectric constant of 3.0 or less and a dielectric loss tangent of 0.005 or less, the mass ratio [(A)/(B)] in the resin composition of the present invention is preferably from 0.1/99.9 to 70/30, more preferably from 0.1/99.9 to 50/50, further preferably from 0.1/99.9 to 40/60, and still further preferably from 0.1/99.9 to 30/70.

Further, from the viewpoint of obtaining the effects of the present invention, the total content of the liquid crystal polymer (A) and the polyimide resin (B) in the resin composition of the present invention is preferably 30% by mass or more, more preferably 40% by mass or more, further preferably 50% by mass or more, still further preferably 65% by mass or more, still further preferably 70% by mass or more, still further preferably 80% by mass or more, and still further preferably 90% by mass or more. The upper limit is 100% by mass.

(Reinforcement fiber)

From the viewpoint of improving the mechanical strength, heat resistance, and the like of the obtained resin composition and molded article, the polyimide resin composition of the present invention may further contain a reinforcement fiber. Examples of the reinforcement fiber include glass fiber, carbon fiber, aramid fiber, boron fiber, metal fiber, and the like. One type of reinforcement fiber may be used alone, or two or more may be used in combination.

There is no particular limitation on the form of the reinforcement fiber, and depending on the form of the obtained resin composition and molded article, either a short fiber or a continuous fiber may be used, or both may be used in combination.

The form of the resin composition will be described later, but for example when the resin composition of the present invention is a pellet, the reinforcement fiber is preferably a short fiber from the viewpoint of extrusion properties and the like. The resin composition may be in the form of a prepreg in which a mixture containing the liquid crystal polymer (A) and the polyimide resin (B) is impregnated in the reinforcement fiber. In this case the reinforcement fiber is preferably a continuous fiber.

If the reinforcement fiber is a short fiber, from the viewpoints of strength and handleability, the average fiber length is preferably 0.2 mm or more, more preferably 0.5 mm or more, and further preferably 2 mm or more, and from the viewpoint of extrusion moldability and the like, the average fiber length is preferably 25 mm or less, more preferably 15 mm or less, and further preferably less than 10 mm.

If the reinforcement fiber is continuous fibers, examples thereof include various forms of the reinforcement fiber in which monofilaments or multifilaments are simply arranged in one direction or alternately, fabrics such as woven fabrics, non-woven fabrics, mats, and the like. Among these, the reinforcement fiber in the form of monofilaments, fabric, non-woven fabric, or a mat is preferable, and in the form of fabric is more preferable.

If the reinforcement fiber is continuous fibers, the fineness of the fibers is preferably 20 to 4,500 tex, and more preferably 50 to 4,000 tex. When the fineness is in this range, impregnation of the resin component is easy, and the elastic modulus and strength of the obtained molded article are excellent. The fineness can be calculated by determining the weight of a continuous fiber of any length and converting into a weight per 1,000 m.

The average fiber diameter of the reinforcement fiber is preferably 1 to 100 μm, more preferably 3 to 50 μm, and further preferably 4 to 20 μm. When the average fiber diameter is in this range, processing is easy, and the elastic modulus and strength of the obtained molded article are excellent.

The average fiber length of the reinforcement fiber (short fibers) and the average fiber diameter of the reinforcement fiber are obtained by randomly selecting and observing 50 or more fibers with a scanning electron microscope (SEM) or the like, measuring, and calculating the number average.

Among the reinforcement fibers, from the viewpoint of improving mechanical strength, at least one selected from the group consisting of glass fiber and carbon fiber is preferable, and from the viewpoint of improving mechanical strength and reducing weight, carbon fiber is more preferable.

Examples of the carbon fiber include polyacrylonitrile-based carbon fiber and pitch-based carbon fiber.

The number of filaments of the carbon fiber is usually in the range of 500 to 100,000, preferably 5,000 to 80,000, more preferably 10,000 to 70,000.

In order to improve the wettability and interface adherence with the liquid crystal polymer (A) and the polyimide resin (B), it is preferable that the carbon fiber is surface treated with a surface treatment agent. The surface treatment agent is a concept that includes a bundling agent and a sizing agent.

Examples of the surface treatment agent include epoxy-based materials, urethane-based materials, acrylic materials, polyamide-based materials, polyimide-based materials, polyester-based materials, vinyl ester-based materials, polyolefin-based materials, polyether-based materials, and the like. One or more of these can be used in combination. From the viewpoint of obtaining higher mechanical properties, an epoxy-based material or a polyimide-based material is preferable as the surface treatment agent.

Commercially available products can also be used as the carbon fiber. Examples of commercially available carbon fiber (short fibers) include the chopped fibers "CFUW", "CFEPP", "CFEPU", "CFA4", "FX1", "EX1", "BF-WS", "CF-N", and "VX-1" series produced by Nihon Polymer Sangyo Co., Ltd., the "Pyrofil Chopped Fiber" series produced by Mitsubishi Chemical Corporation, and the "Tenax-J" series (HT C702, IM C702, etc.) and the "Tenax-A" series (IM P303, HT P722, etc.) produced by Teijin Limited.

When the resin composition of the present invention contains reinforcement fiber, from the viewpoint of improving the mechanical strength and achieving both a low dielectric constant and a low dielectric loss tangent, the content of the reinforcement fiber in the resin composition is preferably from 0.05 to 70% by mass, more preferably 1 to 50% by mass, and further preferably 3 to 35% by mass.

<Additives>

The polyimide resin composition of the present invention may contain additives such as a filler other than the reinforcement fiber, a delusterant, a nucleating agent, a plasticizer, an antistatic agent, an anti-coloring agent, an anti-gelling agent, a flame retardant, a colorant, a slidability improver, an antioxidant, a UV absorbent, a conducting agent, and a resin-modifying agent, as necessary.

The content of the additive is not particularly limited, but from the viewpoint that the effect of the additive is exerted while maintaining the physical properties derived from the liquid crystal polymer (A) and the polyimide resin (B), the content in the resin composition is usually 50% by mass or less, preferably from 0.0001 to 30% by mass, more preferably from 0.0001 to 15% by mass, and further preferably from 0.001 to 10% by mass.

Although the polyimide resin composition of the present invention can take any form, it is preferably a pellet.

Since the liquid crystal polymer (A) and the polyimide resin (B) have thermoplasticity, for example, the liquid crystal polymer (A) and the polyimide resin (B), and various optional components as necessary can be melt-kneaded in an extruder to extrude a strand, and the strand can then be cut into pellets. A molded article having a desired shape can be easily produced by introducing the obtained pellets into a molding machine and thermoforming by the method described later.

<Thermal properties>

By including the liquid crystal polymer (A) and the polyimide resin (B) in the resin composition of the present invention, a resin composition can be obtained that has a suitable elasticity when melted at high temperatures (200°C or more) even containing the liquid crystal polymer (A), and has excellent handleability.

From the viewpoint of obtaining the above-described effects, the resin composition of the present invention preferably has a crystallization temperature Tc of 270°C or more, and more preferably 273°C or more. Although the upper limit of Tc is not limited, from the viewpoint of formability, it is usually 290°C or less, and preferably 285°C or less.

The crystallization temperature Tc of the resin composition can be measured as the peak top temperature of the exothermic peak of crystallization observed by differential scanning calorimeter measurement when the resin composition is melted and then cooled at a cooling rate of 20°C/min. Specifically, the crystallization temperature Tc can be measured by the method described in the Examples. When two or more peak top temperatures are detected as the crystallization temperature Tc, it is preferable that the peak top temperature of the peak on the highest temperature side is within the above range.

By including the liquid crystal polymer (A) and the polyimide resin (B) in the resin composition of the present invention, a resin composition can be obtained that has faster crystallization and higher formability than when the polyimide resin (B) is used alone.

From the viewpoint of obtaining the above effects, the difference (Tm-Tc) between the melting point Tm and the crystallization temperature Tc of the resin composition of the present invention is preferably 80°C or less, more preferably 60°C or less, further preferably 55°C or less, still further preferably 50°C or less, still further preferably 46°C or less, and still further preferably 45°C or less. The lower limit of Tm-Tc is 0°C or more. The smaller the value of Tm-Tc, the faster the crystallization and the higher the formability of the resin composition.

The melting point Tm of the resin composition can be measured by the same method as described above for the polyimide resin (B). When two or more peak top temperatures are detected as the melting point Tm and the crystallization temperature Tc, the peak top temperature on the highest temperature side is used for both Tm and Tc, and it is preferable that the difference is within the above range.

<Electrical properties>

By containing the liquid crystal polymer (A) and the polyimide resin (B) in the resin composition of the present invention, a resin composition can be obtained that achieves both a low dielectric constant and a low dielectric loss tangent. For example, the resin composition of the present invention can achieve a dielectric constant of 3.0 or less and a dielectric loss tangent of 0.005 or less at a measurement frequency of 10 GHz. The dielectric constant is preferably 2.90 or less, and more preferably 2.85 or less. The dielectric loss tangent is preferably 0.004 or less. The dielectric constant and the dielectric loss tangent can be measured, specifically, by the methods described in the Examples.

[Molded article]

The molded article of the present invention contains the resin composition of the present invention.

Since the resin composition of the present invention has thermoplasticity, the molded article of the present invention can be easily produced by heat-molding. Examples of the heat molding method include injection molding, extrusion molding, blow molding, heat press molding, vacuum molding, pneumatic molding, laser molding, welding, and heat adhesion, and the resin composition of the present invention may be molded by any molding method that includes a heat melting step.

The molding temperature depends on the thermal properties (melting point and glass transition temperature) of the resin composition, but for example, in injection-molding, molding is possible at a molding temperature of lower than 400°C and a mold temperature of 220°C or lower.

The method for producing a molded article preferably includes the step of heat-molding the resin composition at a temperature of lower than 400°C. Examples of the specific procedure include the following methods.

First, the liquid crystal polymer (A), the polyimide resin (B) and various optional components as necessary are dry blended, then introduced into an extruder, melted at a temperature of preferably less than 400°C, and melt-kneaded in the extruder and extruded to produce pellets. Alternatively, the polyimide resin (B) may be introduced into the extruder, melted at a temperature of preferably less than 400°C, the liquid crystal polymer (A) and various optional components introduced thereto and melt-kneaded with the polyimide resin (B) in the extruder, and extruded to produce the pellets.

The pellets may be dried, then introduced in various kinds of molding machines, and heat-molded preferably at a temperature of lower than 400°C, thereby producing a molded article having a desired shape.

The resin composition of the present invention can be easily melt-kneaded and extruded, and can achieve both a low dielectric constant and a low dielectric loss tangent. The resin composition, and a molded article containing the same, can be formed by extrusion, and is expected to be developed in applications requiring a low dielectric constant and a low dielectric loss tangent. For example, the resin composition and molded article containing the same can be applied to applications such as fifth generation mobile communication system (5G) related members, other electrical and electronic members, and insulating films.

In addition to the above, examples of applications of the resin composition of the present invention include resin multilayer boards, circuit boards, flexible printed circuit boards (FPC), rigid-flex printed circuit boards, copper clad laminates (CCL), two-layer CCL, printed wiring boards, multilayer films, condenser films, converters, power semiconductors, meshes for screen printing, millimeter wave radars, LEDs, connectors supporting high frequencies, antenna members, and the like. Applications of resin compositions containing the reinforcement fiber include drones, robot arms, wind turbine blades, radomes, and the like.

Examples

The present invention will be described in more detail with reference to examples below, but the present invention is not limited thereto. Further, various measurements and evaluations in the Production Examples and Examples were carried out in the following manner.

<Infrared spectroscopy (IR measurement)>

The IR measurement of the polyimide resin was performed with "JIR-WINSPEC 50", produced by JEOL, Ltd.

<Logarithmic viscosity μ>

The polyimide resin was dried at from 190 to 200°C for 2 hours, and then 0.100 g of the polyimide resin was dissolved in 20 mL of concentrated sulfuric acid (96%, produced by Kanto Chemical Co., Inc.) to form a polyimide resin solution, and the measurement was made at 30°C with a Cannon-Fenske viscometer using the polyimide resin solution as a measurement sample. The logarithmic viscosity μ was obtained according to the following expression.

$$\mu = \ln(ts/t_0)/C$$

$t_0$: elapsed time for flowing concentrated sulfuric acid
ts: elapsed time for flowing polyimide resin solution
C: 0.5 g/dL

<Melting point, glass transition temperature, crystallization temperature, and exothermic amount of crystallization>

The melting point Tm, glass transition temperature Tg, crystallization temperature Tc of the polyimide resin ,the liquid crystal polymer and the resin composition and the exothermic amount of crystallization ΔHm of the polyimide resin were measured with a differential scanning calorimeter ("DSC-6220", produced by SII Nanotechnology, Inc.).
In a nitrogen atmosphere, a thermal history of the following conditions was imposed on the samples. The condition of the thermal history included the first heating (heating rate: 10°C/min), then cooling (cooling rate: 20 °C/min), and then second heating (heating rate: 10°C/min). The heating temperature was from room temperature to 400°C.
The melting point Tm was determined by reading the peak top value of the endothermic peak observed in the second heating. The glass transition temperature (Tg) was determined by reading the value observed in the second heating. The crystallization temperature (Tc) was determined by reading the peak top value of the exothermic peak observed in cooling.
The exothermic amount of crystallization ΔHm (mJ/mg) was calculated from the area of the exothermic peak observed in cooling.

<Crystallization half-time>

The crystallization half-time of the polyimide resin was measured with a differential scanning calorimeter ("DSC-6220", produced by SII Nanotechnology, Inc.).
The polyimide resin was held at 420°C for 10 minutes in a nitrogen atmosphere so as to completely melt, then quenched at a cooling rate of 70°C/min, and the time required from the appearance of the observed crystallization peak to the peak top thereof was calculated. In Table 1, cases where the crystallization half-time was 20 seconds or less are indicated as "<20".

<Weight average molecular weight>

The weight average molecular weight (Mw) of the polyimide resin was measured with a gel permeation chromatography (GPC) measurement apparatus "Shodex GPC-101" produced by Showa Denko K.K. under the following conditions:

Column: Shodex HFIP-806M
Mobile phase solvent: HFIP containing 2 mM sodium trifluoroacetate
Column temperature: 40°C
Flow rate of mobile phase: 1.0 mL/min
Specimen concentration: about 0.1 mass%
Detector: IR detector
Amount of injection: 100 μm
Calibration curve: standard PMMA

<Extrusion properties of resin composition>

In the production of the resin composition of each Example, the torque, resin temperature, and resin pressure when extruding the strand from the extruder were checked. The resin temperature is the temperature at the exit of the extruder.

<Bending strength and flexural modulus>

Using the resin composition produced in each of the examples, molded articles of 80 mm × 10 mm × thickness 4 mm specified in ISO 316 were produced by the method described later, and used for measurement. The bending test was performed with Bend Graph (produced by Toyo Seiki Seisaku-Sho, Ltd.) according to ISO 178 at a temperature of 23°C and a testing speed of 2 mm/min to measure the bending strength and the flexural modulus.

<Tensile strength and tensile modulus>

Using the resin composition produced in each of the examples, 1A-type test pieces specified in JIS K7161-2: 2014 were produced and used for measurement by the methods described later. Using a tensile tester (Strograph VG-1E, produced by Toyo Seiki Co., Ltd.), a tensile test was performed at a temperature of 23°C, a distance between grips of 50 mm, and a test speed of 5 mm/min in accordance with JIS K7161-1: 2014 and K7161-2: 2014, to measure the tensile strength and tensile modulus.

<Heat deformation temperature (HDT)>

Using the resin composition produced in each of the examples, molded articles of 80 mm × 10 mm × thickness 4 mm were produced and used for measurement by the method described later.

For the measurement, a flatwise test was performed in accordance with JIS K7191-1, 2: 2015. Specifically, the heat deformation temperature was measured at distance between fulcrums of 64 mm, a load of 1.80 MPa, and a heating rate of 120°C/hour using an HDT test instrument "Auto-HDT3D-2" (produced by Toyo Seiki Seisaku-Sho, Ltd.).

<Dielectric constant and dielectric loss tangent>

Using the resin composition produced in each of the examples, molded articles were produced by injection molding by the method described later. The produced molded articles were then cut to obtain test pieces 1.5 mm × 80 mm × 1.5 mm in thickness. The test pieces were dried with a desiccator and then promptly used for measurement. As the measuring device, a "PNA-L network analyzer N5230A" produced by Agilent Technologies, Inc. and a cavity resonator "CP531" produced by Kanto Electronics Co., Ltd., were used. The dielectric constant and dielectric loss tangent were measured in accordance with IEC 62810 by a cavity perturbation technique at a temperature of 23°C, a humidity of 50%, and a measurement frequency of 10 GHz. The measured value was the average value of n = 2.

<Water absorption rate>

Using the resin composition produced in Example 4 and Reference Example 2, molded articles was produced by injection molding by the method described later. The produced molded articles were then cut to obtain test pieces 30 mm × 20 mm × 4 mm in thickness (about 3 g). The test pieces were dried at 50°C for 24 hours, and then used for water absorption measurement. The test pieces were immersed in water at 23°C for 24 hours, and the water absorption rate (%) was then measured in accordance with JIS K7209:2000. The measured value was the average value of n = 3.

<Coefficient of thermal expansion (CTE)>

Using the resin composition produced in Example 4 and Reference Example 2, molded articles were produced by injection molding by the method described later. The produced molded articles were then cut to obtain test pieces of 5 mm × 4 mm, 10 mm in length with a cross-sectional area of 20 $mm^2$. At this time, the molded articles were cut so that the MD was in the longitudinal direction of the test piece. Using the test pieces, TMA was measured in the range of 23 to 300°C under an atmosphere with a nitrogen flow rate of 150 mL/min in compression mode at a load of 49 mN and a heating rate of 5°C/min using a thermomechanical analyzer "TMA / SS6100" (produced by Hitachi High-Tech Science Corporation). The measurement results in the range of 23 to 150°C were analyzed, and the CTE in the MD direction of the molded articles was determined in accordance with JIS K7197:2012 (compression mode).

Production Example 1 (production of polyimide resin 1)

500 g of 2-(2-methoxyethoxy)ethanol (produced by Nippon Nyukazai Co., Ltd.) and 218.12 g (1.00 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the

other hand, 49.79 g (0.35 mol) of 1,3-bis(aminomethyl)cyclohexane (produced by Mitsubishi Gas Chemical Company, Inc., cis/trans ratio = 7/3) and 93.77 g (0.65 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This mixed diamine solution was added into the suspended solution gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 130 g of 2-(2-methoxyethoxy)ethanol and 1.284 g (0.010 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 190°C. In this heating process, the deposition of a polyimide resin powder and dehydration associated with imidization were confirmed at a solution temperature of from 120 to 140°C. The solution was kept at 190°C for 30 minutes, then allowed to cool to room temperature, and filtered. The obtained polyimide resin powder was washed and filtered with 300 g of 2-(2-methoxyethoxy)ethanol and 300 g of methanol, and then dried in a dryer at 180°C for 10 hours to obtain 317 g of a powder of polyimide resin 1.

The obtained polyimide resin 1 powder was melt-kneaded and extruded at a barrel temperature of 350°C and a screw rotation speed of 70 rpm with a Labo Plastomill (produced by Toyo Seiki Seisaku-sho Co., Ltd.). A strand extruded from the extruder was cooled in air and then pelletized with a pelletizer ("Fan Cutter FC-Mini-4/N" produced by Hoshi Plastics Co., Ltd.). The obtained pellets were dried at 150°C for 12 hours, and then used to produce the molded articles.

The measurement of the IR spectrum of polyimide resin 1 showed the characteristic absorption of an imide ring ν(C=O) observed at 1768 and 1697 ($cm^{-1}$). The logarithmic viscosity was 1.30 dL/g, Tm was 323°C, Tg was 184°C, Tc was 266°C, the exothermic amount of crystallization was 21.0 mJ/mg, the crystallization half-time was 20 seconds or less, and Mw was 55,000.

Table 1 shows the composition and evaluation results of the polyimide resin 1 of Production Example 1. The values expressed in mol% of the tetracarboxylic acid component and the diamine component in Table 1 are values calculated from the charged amount of each component in production of the polyimide resin.

Table 1

| | | Tetracarboxylic acid component (mol% in the total tetracarboxylic acid component) | Diamine component (mol% in the total diamine component) | | (1)/{(1)+(2)} (mol%) *1 | Tm (°C) | Tg (°C) | Tc (°C) | Exothermic amount of crystallization ΔHm (mJ/mg) | Crystallization half-time (seconds) | Mw |
|---|---|---|---|---|---|---|---|---|---|---|---|
| | | PMDA | 1,3-BAC | OMDA | | | | | | | |
| Production Example 1 | Polyimide Resin 1 | 100 | 35 | 65 | 35 | 323 | 184 | 266 | 21.0 | <20 | 55,000 |

*1 Content ratio (mol%) of the repeating structural unit of the formula (1) with respect to the total of the repeating structural unit of the formula (1) and the repeating structural unit of the formula (2) in Polyimide resin 1

The abbreviations in the table are as follows.

- PMDA; pyromellitic dianhydride
- 1,3-BAC; 1,3-bis(aminomethyl)cyclohexane
- OMDA; 1,8-octamethylenediamine

Examples 1 to 4 (production and evaluation of resin compositions and molded articles)

Pellets of liquid crystal polymer 1 containing the repeating structural unit represented by the formula (IV) ("UENO LCP A8100" produced by Ueno Fine Chemicals Industry, Ltd., containing structural units derived from 6-hydroxy-2-naphthoic acid and p-hydroxybenzoic acid; melting point 220°C) and pellets of polyimide resin 1 obtained in Production Example 1 were used in the ratios shown in Table 2.

Liquid crystal polymer 1 and polyimide resin 1 were fed into the extruder from a hopper on the inlet side of a co-rotating twin-screw kneading extruder ("HK-25D", produced by Parker Corporation, screw diameter D = 25 mm, LID = 41 (L: screw length)), kneaded at a cylinder setting temperature of 335°C, a feed rate of 6 kg/hr, and a screw rotation speed of 150 rpm, and a strand was extruded. The torque, resin temperature, and resin pressure at this point were checked.

The strand extruded from the extruder was cooled with water, pelletized with a pelletizer ("Fan Cutter FC-Mini-4/N", produced by Hoshi Plastic Co., Ltd.), and then used for injection molding.

The injection molding was performed at a cylinder setting temperature of 370°C, a mold temperature of 200°C, and an injection speed of 80 mm/s with an injection molding machine ("ROBOSHOT α-S30iA", produced by FANUC Corporation), thereby preparing a molded article having a desired shape to be used in the various evaluations.

Various evaluations were performed by the methods described above using the obtained molded articles. The results are shown in Tables 2 and 3.

Reference example 1

A molded article was prepared in the same manner as in Examples 1 to 4, except that only liquid crystal polymer 1 was used and injection molding was performed under the conditions shown in Table 2 without pelletization. Various evaluations were performed in the same manner as in Examples 1 to 4. The results are shown in Tables 2 and 3.

Reference example 2

A molded article was prepared in the same manner as in Examples 1 to 4, except that only pellets of polyimide resin 1 was used. The water absorption rate and CTE were measured in the same manner as in Examples 1 to 4. Further, the melting point, glass transition temperature, crystallization temperature, and exothermic amount of crystallization of polyimide resin 1 were measured by the methods described above, and the results are collectively shown in Table 3.

Table 2

| | | | Example | | | | Reference Example |
|---|---|---|---|---|---|---|---|
| | | | 1 | 2 | 3 | 4 | 1 |
| Resin compositional makeup (% by mass) | (A) Liquid crystal polymer 1 | | 0.2 | 0.9 | 10 | 30 | 100 |
| | (B) Polyimide resin 1 | | 99.8 | 99.1 | 90 | 70 | 0 |
| Mass ratio (A)/(B) | | | 0.2/99.8 | 0.9/99.1 | 10/90 | 30/70 | 100/0 |
| Extrusion properties | Cylinder setting temperature | °C | 335 | 335 | 335 | 335 | - |
| | Torque | % | 84-95 | 79-90 | 35-40 | 15-20 | - |
| | Resin temperature | °C | 369 | 366 | 348 | 337 | - |
| | Resin pressure | MPa | 1.8-1.9 | 1.5-1.9 | 1.0-1.4 | 0.2-0.3 | - |

(continued)

| | | | Example | | | | Reference Example |
|---|---|---|---|---|---|---|---|
| | | | 1 | 2 | 3 | 4 | 1 |
| Injection molding condition | Cylinder setting temperature | °C | 370 | 370 | 370 | 370 | 260 |
| | Mold temperature | °C | 200 | 200 | 200 | 200 | 120 |
| Mechanical properties | Flexural strength | MPa | 125 | 125 | 93 | 73 | 154 |
| | Flexural modulus | GPa | 2.6 | 2.6 | 3.2 | 2.2 | 8.7 |
| | Tensile strength | MPa | 83 | 88 | 72 | 64 | - |
| | Tensile modulus | GPa | 2.6 | 2.8 | 3.7 | 4.2 | - |
| Thermal properties | HDT (1.80MPa) | °C | 174 | 176 | 168 | 113 | - |
| Electrical properties | Dielectric constant (10 GHz) | - | 2.76 | 2.80 | 2.82 | 2.90 | 3.82 |
| | Dielectric loss tangent (10 GHz) | - | 0.0041 | 0.0038 | 0.0035 | 0.0027 | 0.0005 |
| *: "-" means not carried out or not measured | | | | | | | |

Table 3

| | | | Example | | | | Reference Example | Reference Example |
|---|---|---|---|---|---|---|---|---|
| | | | 1 | 2 | 3 | 4 | 1 | 2 |
| Resin compositional makeup (% by mass) | (A) Liquid crystal polymer 1 | | 0.2 | 0.9 | 10 | 30 | 100 | 0 |
| | (B) Polyimide resin 1 | | 99.8 | 99.1 | 90 | 70 | 0 | 100 |
| Mass ratio (A)/(B) | | | 0.2/99.8 | 0.9/99.1 | 10/90 | 30/70 | 100/0 | 0/100 |
| Thermal properties | Melting point Tm | °C | 323 | 322 | 320 | 320 | 220 | 323 |
| | Glass transition temperature Tg | °C | 186 | 191 | ND | ND | ND | 184 |
| | Crystallization temperature Tc | °C | 274, 236 | 277, 235 | 276, 231 | 274, 230 | 173 | 266 |
| | Tm-Tc | °C | 49 | 45 | 44 | 46 | 47 | 57 |
| Water absorption rate (after immersion at 23°C × 24 hours) | | % | | | | 0.076 | | 0.128 |

(continued)

| | | Example | | | | Reference Example | Reference Example |
|---|---|---|---|---|---|---|---|
| | | 1 | 2 | 3 | 4 | 1 | 2 |
| CTE (MD) | $10^{-5}$/°C | | | | 1.6 | | 5.4 |
| ND: not detected | | | | | | | |

As shown in Table 2, according to the resin compositions and molded articles of Examples 1 to 4, both a low dielectric constant of 3.0 or less and a low dielectric loss tangent of 0.005 or less can be achieved. Moreover, it can be seen that the higher the ratio of liquid crystal polymer 1, the lower the torque, resin temperature and resin pressure during strand extrusion, and that the extrusion properties are good.

Further, as shown in Table 3, the resin compositions of Examples 1 to 4 had better crystallization temperatures Tc than liquid crystal polymer 1 alone (Reference Example 1) and polyimide resin 1 alone (Reference Example 2). Therefore, it can be said that handleability is excellent without decreasing elasticity at the time of high-temperature melting too much. In addition, the resin compositions of Examples 1 to 4 have smaller values of Tm-Tc than Reference Example 2, and thus it is considered that crystallization is faster and formability is better.

A comparison between Example 4 and Reference Example 2 shows that the molded article composed of the resin composition of the present invention has a low water absorption rate as well as a small CTE value and excellent dimensional stability during heating.

Examples 5 to 10 (production and evaluation of carbon fiber reinforced resin compositions and molded articles)

Pellets of liquid crystal polymer 1 ("UENO LCP A8100" produced by Ueno Fine Chemicals Industry, Ltd.) and pellets or powder of polyimide resin 1 obtained in Production Example 1 (pellets in Examples 5 and 6, powder in Examples 7 to 10), talc as an inorganic filler ("Nano Ace D-800" produced by Nippon Talc Co., Ltd., average particle size (D50): 0.8 μm), and carbon fiber ("Tenax-J IM C702", produced by Teijin Industries, average fiber length: 6 mm, amount of sizing agent: 1.8%) were used in the ratios shown in Table 3.

Liquid crystal polymer 1, polyimide resin 1, and the talc were fed into the extruder from a hopper on the inlet side of a co-rotating twin-screw kneading extruder ("HK-25D", produced by Parker Corporation, screw diameter D = 25 mm, L/D = 41 (L: screw length)), the carbon fiber was fed from the side, the resulting mixture was kneaded at a cylinder setting temperature of 350°C, a feed rate of 6 kg/hr, and a screw rotation speed of 150 rpm, and a strand was extruded. The torque, resin temperature, and resin pressure at this point were checked.

The strand extruded from the extruder was cooled with water, pelletized with a pelletizer ("Fan Cutter FC-Mini-4/N", produced by Hoshi Plastic Co., Ltd.), and then used for injection molding.

The injection molding was performed at a cylinder setting temperature of 370°C, a mold temperature of 200°C, and an injection speed of 30 mm/s with an injection molding machine ("ROBOSHOT α-S30iA", produced by FANUC Corporation), thereby preparing a molded article having a desired shape to be used in the various evaluations.

Various evaluations were performed by the methods described above using the obtained molded articles. The results are shown in Table 4.

Table 4

| | | | Example | | | | | |
|---|---|---|---|---|---|---|---|---|
| | | | 5 | 6 | 7 | 8 | 9 | 10 |
| Resin compositional makeup (% by mass) | (A) Liquid crystal polymer 1 | | 0.07 | 0.1 | 1.0 | 5.0 | 10.0 | 15.0 |
| | (B) Polyimide resin 1 | | 69.23 | 49.4 | 48.5 | 44.5 | 39.5 | 34.5 |
| | Talc | | 0.7 | 0.5 | 0.5 | 0.5 | 0.5 | 0.5 |
| | Carbon fiber | | 30.0 | 50.0 | 50.0 | 50.0 | 50.0 | 50.0 |
| | Total | | 100.0 | 100.0 | 100.0 | 100.0 | 100.0 | 100.0 |
| Mass ratio (A)/(B) | | | 0.1/99.9 | 0.2/99.8 | 2.0/98.0 | 10.1/89.9 | 20.2/79.8 | 30.3/69.7 |
| Strand extrusion | Cylinder setting temperature | °C | 335 | 335 | 335 | 335 | 335 | 335 |
| | Torque | % | 105-112 | 101-110 | 69-82 | 57-63 | 56-68 | 48-56 |
| | Resin temperature | °C | 375 | 381 | 383 | 378 | 377 | 372 |
| | Resin pressure | MPa | 3.7-4.3 | 4.6-5.2 | 4.5-5.8 | 6.7-8.0 | 5.5-6.3 | 4.5-5.5 |
| Injection molding condition | Cylinder setting temperature | °C | 370 | 370 | 370 | 370 | 370 | 370 |
| | Mold temperature | °C | 200 | 200 | 200 | 200 | 200 | 200 |
| Mechanical properties | Flexural strength | MPa | 301 | 293 | 308 | 326 | 265 | 251 |
| | Flexural modulus | GPa | 21.7 | 33.0 | 33.1 | 35.6 | 36.2 | 34.5 |
| Thermal properties | HDT (1.80MPa) | °C | 290 | 292 | 290 | 294 | 291 | 278 |

From a comparison between Tables 2 and 4, it can be seen that the flexural strength, flexural modulus, and HDT can be improved by reinforcing the resin composition of the present invention with carbon fiber.

Examples 11 to 16 (production and evaluation of glass fiber reinforced resin compositions and molded articles)

Pellets of a glass fiber reinforced liquid crystal polymer ("UENO LCP 6030G-NCSL" produced by Ueno Fine Chemicals Industry, Ltd., melting point 320°C) containing 70% by mass of liquid crystal polymer 2 containing the repeating structural unit represented by the formula (IV) and 30% by mass of glass fiber, and pellets of polyimide resin 1 obtained in Production Example 1 were used in the ratios shown in Table 5.

The glass fiber reinforced liquid crystal polymer and polyimide resin 1 were fed into the extruder from a hopper on the inlet side of a co-rotating twin-screw kneading extruder ("HK-25D", produced by Parker Corporation, screw diameter D = 25 mm, LID = 41 (L: screw length)), kneaded at a cylinder setting temperature of 335°C, a feed rate of 6 kg/hr, and a screw rotation speed of 150 rpm, and a strand was extruded. The torque, resin temperature, and resin pressure at this point were checked.

The strand extruded from the extruder was cooled with water, pelletized with a pelletizer ("Fan Cutter FC-Mini-4/N", produced by Hoshi Plastic Co., Ltd.), and then used for injection molding.

The injection molding was performed at a cylinder setting temperature of 370°C, a mold temperature of 200°C, and an injection speed of 30 mm/s with an injection molding machine ("ROBOSHOT $\alpha$-S30iA", produced by FANUC Corporation), thereby preparing a molded article having a desired shape to be used in the various evaluations.

Various evaluations were performed by the methods described above using the obtained molded articles. The results are shown in Tables 5.

Reference example 3

A molded article was prepared in the same manner as in Examples 11 to 16, except that only a glass fiber reinforced liquid crystal polymer was used and injection molding was performed without pelletization. Various evaluations were performed in the same manner as in Examples 11 to 16. The results are shown in Table 5.

Table 5

| | | | Example | | | | | | Reference Example |
|---|---|---|---|---|---|---|---|---|---|
| | | | 11 | 12 | 13 | 14 | 15 | 16 | 3 |
| Resin compositional makeup (% by mass) | (A) Liquid crystal polymer 2 | | 0.14 | 0.63 | 7.0 | 21.0 | 35.0 | 49.0 | 70.0 |
| | (B) Polyimide resin 1 | | 99.8 | 99.1 | 90.0 | 70.0 | 50.0 | 30.0 | - |
| | Glass fiber | | 0.06 | 0.27 | 3.0 | 9.0 | 15.0 | 21.0 | 30.0 |
| | Total | | 100.0 | 100.0 | 100.0 | 100.0 | 100.0 | 100.0 | 100.0 |
| Mass ratio (A)/(B) | | | 0.1/99.9 | 0.6/99.4 | 7.2/92.8 | 23.1/76.9 | 41.2/58.8 | 62.0/38.0 | 100/0 |
| Extrusion properties | Cylinder setting temperature | °C | 335 | 335 | 335 | 335 | 335 | 335 | - |
| | Torque | % | 91-95 | 87-93 | 60-68 | 34-38 | 25-29 | 20-24 | - |
| | Resin temperature | °C | 370 | 368 | 357 | 347 | 342 | 340 | - |
| | Resin pressure | MPa | 1.8-2.0 | 1.8-2.0 | 1.7-1.9 | 1.0-1.1 | 0.5-0.6 | 0.4 | - |
| Injection molding condition | Cylinder setting temperature | °C | 370 | 370 | 370 | 370 | 370 | 370 | 370 |
| | Mold temperature | °C | 200 | 200 | 200 | 200 | 200 | 200 | 200 |
| Mechanical properties | Flexural strength | MPa | 119 | 131 | 117 | 123 | 139 | 169 | 228 |
| | Flexural modulus | GPa | 2.5 | 2.8 | 3.6 | 5.6 | 8.0 | 10.4 | 13.6 |
| | Tensile strength | MPa | 80 | 81 | 82 | 83 | 90 | 106 | 143 |
| | Tensile modulus | GPa | 2.6 | 2.8 | 3.3 | 5.8 | 7.6 | 10.2 | 14.6 |
| Thermal properties | HDT (1.80MPa) | °C | 174 | 175 | 177 | 184 | 255 | 276 | 293 |
| | Melting point Tm | °C | 306, 322 | 322 | 321 | 320 | 318 | 307, 317 | - |
| | Glass transition temperature Tg | °C | ND | ND | ND | ND | ND | ND | - |
| | Crystallization temperature Tc | °C | 276, 237 | 276, 236 | 277 | 276, 229 | 276, 224 | 277 | - |
| | Tm-Tc | °C | 46 | 46 | 44 | 44 | 42 | 30 | - |

(continued)

| | | | Example | | | | | | Reference Example |
|---|---|---|---|---|---|---|---|---|---|
| | | | 11 | 12 | 13 | 14 | 15 | 16 | 3 |
| Electrical properties | Dielectric constant (10 GHz) | - | - | - | - | 3.14 | 3.25 | 3.51 | 3.96 |
| | Dielectric loss tangent (10 GHz) | - | - | - | - | 0.0039 | 0.0041 | 0.0042 | 0.0043 |
| ND: not detected<br>*: '-" means not carried out or not measured | | | | | | | | | |

As shown in Table 5, the resin composition of the present invention can achieve both a low dielectric constant and a low dielectric loss tangent even when it contains glass fiber.

Industrial Applicability

The resin composition of the present invention, while containing a liquid crystal polymer, can be easily melt-kneaded and extruded while also having excellent handleability when melted, and can achieve both a low dielectric constant and a low dielectric loss tangent. The resin composition, and a molded article containing the same, can be formed by extrusion, and is expected to be developed in applications requiring a low dielectric constant and a low dielectric loss tangent. For example, the resin composition and molded article containing the same can be applied to applications such as fifth generation mobile communication system (5G) and sixth generation mobile communication system (6G) related members, other electrical and electronic members, and insulating films.

## Claims

1. A resin composition comprising a liquid crystal polymer (A) and a polyimide resin (B), wherein

the liquid crystal polymer (A) comprises at least one repeating structural unit selected from the group consisting of repeating structural units represented by the following formulas (I) to (IV), and
the polyimide resin (B) comprises a repeating structural unit represented by the following formula (1) and a repeating structural unit represented by the following formula (2), and a content ratio of the repeating structural unit of the formula (1) with respect to the total of the repeating structural unit of the formula (1) and the repeating structural unit of the formula (2) is 20 to 70 mol%:

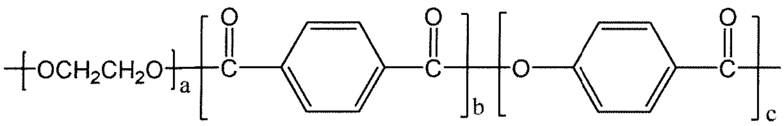
(I)

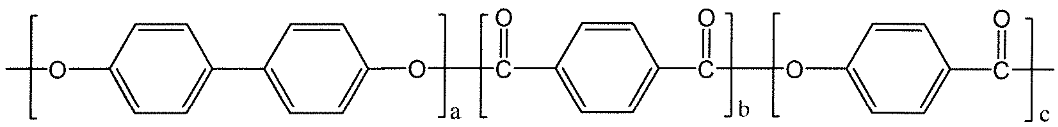
(II)

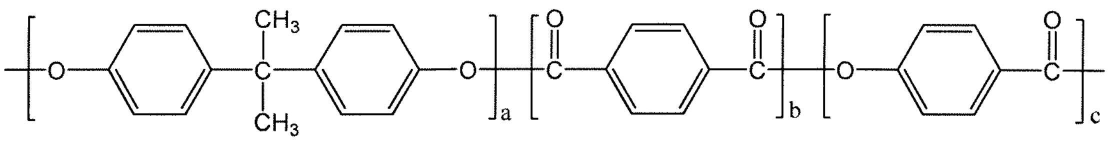
(III)

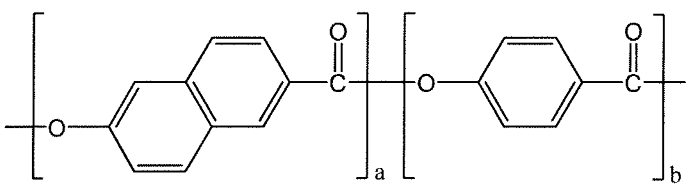
(IV)

wherein a, b, and c represent an average number of repeating structural units, and

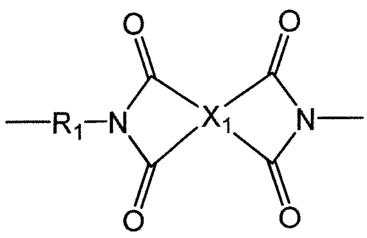
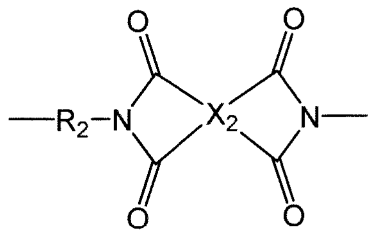

(1) (2)

wherein $R_1$ represents a divalent group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent group having from 6 to 22 carbon atoms containing at least one aromatic ring.

**2.** The resin composition according to claim 1, wherein a mass ratio of the liquid crystal polymer (A) to the polyimide resin (B), [(A)/(B)], is in a range of 0.1/99.9 to 99.9/0.1.

**3.** The resin composition according to claim 1 or 2, wherein the liquid crystal polymer (A) has a melting point of 180°C or more.

**4.** The resin composition according to any one of claims 1 to 3, wherein in the polyimide resin (B), the content ratio of the repeating structural unit of the formula (1) with respect to the total of the repeating structural unit of the formula (1) and the repeating structural unit of the formula (2) is 20 mol% or more and less than 40 mol%.

**5.** The resin composition according to any one of claims 1 to 4, further comprising a reinforcement fiber.

**6.** The resin composition according to any one of claims 1 to 5, wherein a dielectric constant is 3.0 or less and a dielectric loss tangent is 0.005 or less at a measurement frequency of 10 GHz.

**7.** A molded article comprising the resin composition according to any one of claims 1 to 6.

## INTERNATIONAL SEARCH REPORT

International application No.
PCT/JP2021/023493

A. CLASSIFICATION OF SUBJECT MATTER
Int.Cl. C08G73/10(2006.01)i, C08K7/02(2006.01)i, C08L67/02(2006.01)i, C08L79/08(2006.01)i, C08J5/04(2006.01)i, B29C70/06(2006.01)i, B29C70/28(2006.01)i
FI: C08L67/02, C08L79/08Z, C08K7/02, B29C70/06, B29C70/28, C08G73/10, C08J5/04CFG
According to International Patent Classification (IPC) or to both national classification and IPC

B. FIELDS SEARCHED
Minimum documentation searched (classification system followed by classification symbols)
Int.Cl. C08G73/10, C08K7/02, C08L67/02, C08L79/08, C08J5/04, B29C70/06, B29C70/28

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-113011 A (ASAHI KASEI CHEMICALS CORPORATION) 10 May 2007 (2007-05-10), claims 1, 4-5, paragraphs [0001], [0043] | 1-7 |
| Y | WO 2016/147997 A1 (MITSUBISHI GAS CHEMICAL COMPANY, INC.) 22 September 2016 (2016-09-22), claim 1, paragraphs [0014], [0018], [0081], [0094], [0113]-[0139] | 1-7 |
| A | JP 2000-516292 A (E. I. DU PONT DE NEMOURS AND COMPANY) 05 December 2000 (2000-12-05), claims 1-2 | 1-7 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 September 2021 | 14 September 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/023493

C (Continuation). DOCUMENTS CONSIDERED TO BE RELEVANT

| Category* | Citation of document, with indication, where appropriate, of the relevant passages | Relevant to claim No. |
|---|---|---|
| A | JP 08-104811 A (MITSUI TOATSU CHEM INC.) 23 April 1996 (1996-04-23), claim 1 | 1-7 |
| A | JP 2006-008976 A (SUMITOMO CHEMICAL CO., LTD.) 12 January 2006 (2006-01-12), claim 1 | 1-7 |

Form PCT/ISA/210 (second sheet) (January 2015)

**INTERNATIONAL SEARCH REPORT**
Information on patent family members

International application No.
PCT/JP2021/023493

| | | |
|---|---|---|
| JP 2007-113011 A | 10 May 2007 | US 2007/0270530 A1<br>claims 1, 5-6,<br>paragraphs [0001], [0050]<br>EP 1801160 A1<br>EP 2161305 A2<br>CN 101040004 A<br>CN 101831166 A |
| WO 2016/147997 A1 | 22 September 2016 | US 2017/0275425 A1<br>claim 1, paragraphs [0021], [0023], [0130], [0155], [0184]-[0233]<br>EP 3272786 A1<br>KR 10-2017-0027859 A<br>CN 106715534 A |
| JP 2000-516292 A | 05 December 2000 | US 5700863 A<br>claims 1-2<br>CN 1228105 A<br>KR 10-0504054 B1 |
| JP 08-104811 A | 23 April 1996 | US 5312866 A<br>claim 1<br>US 5514748 A<br>US 5516837 A<br>US 5571875 A<br>EP 430640 A1<br>EP 633294 A2<br>EP 812885 A2 |
| JP 2006-008976 A | 12 January 2006 | US 2005/0266233 A1<br>claim 1<br>KR 10-2006-0048116 A<br>CN 1702101 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005317953 A
- JP 2011216841 A
- WO 2016147996 A